# EUROPEAN PATENT SPECIFICATION

(11) **EP 2 701 430 B1**
(45) Date of publication and mention of the grant of the patent: **25.10.2017**
(21) Application number: 13739598.4
(22) Date of filing: 27.02.2013
(51) Int. Cl.: H04W 36/14, H04W 88/06

(54) **METHOD, DEVICE AND MULTIMODE TERMINAL FOR IMPLEMENTING NETWORK SWITCHING**
VERFAHREN, VORRICHTUNG UND MULTIMODALES ENDGERÄT ZUR IMPLEMENTIERUNG EINES TECHNISCHEN NETZWERKSCHALTBEREICHS
PROCÉDÉ, DISPOSITIF, ET TERMINAL MULTIMODE POUR L'EXÉCUTION D'UNE COMMUTATION DE RÉSEAU

(30) Priority: 03.07.2012 CN 201210226599
(43) Date of publication of application: 26.02.2014
(73) Proprietor: Huawei Device Co., Ltd., Longgang District Shenzhen Guangdong 518129 (CN)
(72) Inventor: ZHAO, Xuewen, Shenzhen, Guangdong 518129 (CN)
(74) Representative: Körber, Martin Hans
(86) International application number: PCT/CN2013/071938
(87) International publication number: WO 2014/005432

(56) References cited:
- WO-A1-2006/098599
- WO-A2-2005/062575
- CN-A- 1 906 913
- CN-A- 102 421 159
- CN-A- 102 421 159
- US-A1- 2006 120 329
- US-A1- 2008 026 733
- US-A1- 2010 195 608

## Description

The present invention relates to the field of communications technologies, and in particular, to a method, an apparatus, and a multimode terminal for implementing network switching.

### BACKGROUND

With the development of wireless communication technologies and the increasing maturity and commercial use of multiple wireless technologies, high rates achieved by high-bandwidth wireless technologies currently have found more and more favor in operators' eyes. Therefore, many operators begin to deploy wireless networks where multiple modes coexist based on an original single wireless network, such as coexistence of a WiMAX (Worldwide Interoperability for Microwave Access, worldwide interoperability for microwave access) network and a 3G (3rd-generation, 3rd generation mobile communication technology) network, coexistence of an LTE (Long Term Evolution, long term evolution) network and a 3G network, and coexistence of a 3G network and another 3G network. Under this technical background, a multimode terminal that is capable of accessing networks of multiple modes and implementing service switching between the networks of multiple modes has emerged.

However, if existing networks of multiple modes coexist, regardless of whether a multimode switching operation is performed, an IP (Internet Protocol, Internet Protocol) address obtained by a multimode terminal from a network side does not change. For example, when a PC (personal computer, personal computer) accesses the Internet by using a multimode terminal, the multimode terminal acquires a public network IP address from an access network, and the PC acquires a private network address from the multimode terminal to implement network access; in addition, to send a packet of the PC to the Internet, the multimode terminal generally uses the NAT (Network Address Translation, network address translation) technology to translate the packet first. Therefore, the multimode terminal needs to maintain a NAT translation table to ensure that a data packet between the PC and the Internet can be correctly forwarded.

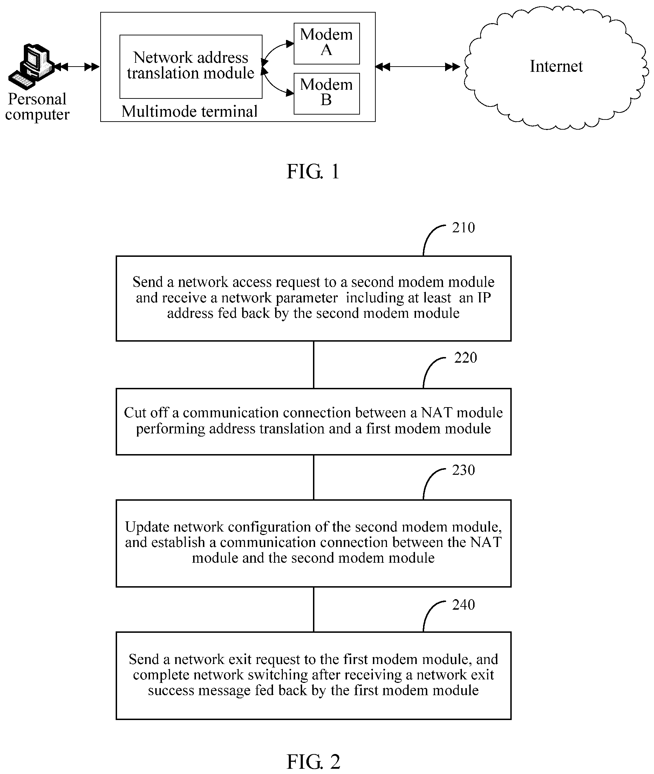

However, in a networking scenario shown in FIG. 1, when a multimode terminal performs network switching, that is, when it switches from a network connected to a Modem (modem) A to a network connected to a Modem B, the multimode terminal needs to switch its route from the Modem A to the Modem B, but a translation NAT table cannot be switched from the Modem A to the Modem B. As a result, a data service cannot continue, that is, the data service is interrupted, resulting in a poor user experience.

Document EP 2608600 A2, discloses a system that a host, connected a first network, triggers initiating of network access to a second network by a multimode terminal and does not release the IP address of the first network, and compares the IP address obtained from the second network and the IP address of the first network; if the two IP address are the same, then the host continues to use the same IP address in the second network.

Document WO 2005/062575 A2, discloses that several physical interfaces can share one IP address through a logical interface, and a mobile IP module can determine to communicate with different radio networks through different physical interfaces.

### SUMMARY

Embodiments of the present invention provide a method and an apparatus for implementing network switching, which are capable of ensuring that a service is not interrupted during network switching, thereby improving the user experience and satisfaction.To solve the preceding problem, the embodiments of the present invention provide the following technical solutions:
An embodiment of a first aspect of the present invention provides a method for implementing network switching performed in a multimode terminal, and its first implementation manner includes:
   sending a network access request to a second modem module and receiving a network parameter including at least an IP address fed back by the second modem module, where the IP address fed back by the second modem module is the same as an IP address acquired by a first modem module that has accessed a network; cutting off a communication connection between a NAT module performing address translation and the first modem module; and updating network configuration of the second modem module and establishing a communication connection between the NAT module and the second modem module, wherein the cutting off a communication connection between a NAT module and the first modem module specifically includes: dissociating a NAT entry in the NAT module from the first modem module; storing a NAT entry associated with the first modem module; and deleting a network parameter configured on the first modem module to cut off the communication connection between the NAT module and the first modem module, the updating network configuration of the second modem module and establishing a communication connection between the NAT module and the second modem module specifically includes: updating the network configuration of the second modem module by using the network parameter fed back by the second modem module; associating the stored NAT entry with the second modem module; and switching a data service to the second modem module.

An embodiment of a second aspect of the present invention provides an apparatus for implementing network switching, and its first implementation manner includes: a sending unit, a receiving unit, a cutting unit, and a communication unit; where the sending unit is configured to send a network access request to a second modem module of a multimode terminal and send a network exit request to a first modem module of the multimode terminal; the receiving unit is configured to receive a network parameter including at least an IP address fed back by the second modem module and receive a network exit success message fed back by the first modem module, where the received IP address is the same as an IP address acquired by a first modem module that has accessed a network; the cutting unit is configured to cut off a communication connection between a NAT module performing address translation in the multimode terminal and the first modem module after the receiving unit receives the network parameter fed back by the second modem module; and the communication unit is configured to: after the cutting unit completes a cutting operation, update network configuration of the second modem module, establish a communication connection between the NAT module and the second modem module, and instruct the sending unit to send the network exit request, wherein the cutting unit further includes: a dissociating module, a storage module, and a second deleting module, where the dissociating module is configured to dissociate a NAT entry in the NAT module from the first modem module; the storage module is configured to store a NAT entry associated with the first modem module; and the second deleting module is configured to delete a network parameter configured on the first modem module after the storage module completes a storage operation, the communication unit further includes: a second updating module, an associating module, and a second switching module; where the second updating module is configured to update the network configuration of the second modem module by using the network parameter fed back by the second modem module; the associating module is configured to associate the NAT entry stored by the storage module with the second modem module after the second updating module completes an updating operation; and the second switching module is configured to switch a data service to the second modem module after the associating module completes an associating operation.

As can be seen from the above, during network switching performed by using the method, the apparatus, and the multimode terminal of the embodiments of the present invention, a communication connection between a NAT module implementing address translation and a modem module accessing an original network is disconnected, and a communication connection is established between another modem module accessing a new network and the NAT module after the another modem module is configured with a relevant network parameter, so as to ensure that the link information and rule of a NAT translation table do not change in the network switching process. As a result, no IP address needs to be reconfigured. This ensures that a service is not interrupted during network switching, thereby improving the user experience and satisfaction.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a network topology of traditional network switching;
FIG. 2 is a schematic flowchart of a method for implementing network switching according to an embodiment of the present invention;
FIG. 3 is another schematic flowchart of a method for implementing network switching according to an embodiment of the present invention;
FIG. 4 is still another schematic flowchart of a method for implementing network switching according to an embodiment of the present invention; and
FIG. 5 is a schematic structural diagram of an apparatus for implementing network switching according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

A basic idea of the embodiments of the present invention is that during network switching, a change of an upper-layer network parameter is isolated to ensure that the link information and rules of a NAT translation table do not change, so that no IP address needs to be reconfigured, thereby ensuring that a service is not interrupted during network switching and improving the user experience and satisfaction.

An embodiment of the present invention provides a method for implementing network switching, as shown in FIG. 2. The method includes:
Step 210: When network switching needs to be performed, an MCM (Multimode control module, multimode control module) of a multimode terminal sends a network access request to a second modem module and receive a network parameter including at least an IP address fed back by the second modem module, where the IP address fed back by the second modem module is the same as an IP address acquired by a first modem module that has accessed a network.

The network parameter fed back by the second modem module may further include: a router address, a DNS (Domain Name System, domain name system) server address, and so on, but this embodiment is not limited thereto. It should be noted that the first modem module and second modem module mentioned in this embodiment do not have any sequential relationship, both serve as merely examples of modem modules in different connection states, and both are the same from the perspectives of network access and their functions, and no further details are provided herein.

Specifically, when a data packet is sent through a router in an internal network having a private address, a NAT technology may be used to translate the private address into a valid IP address, thereby ensuring that a local area network may implement communication requirements of all PCs with the Internet in a private address network by using only a small amount of IP addresses. Therefore, before and after performing network switching, the multimode terminal must acquire a same IP address to ensure that a NAT translation rule of the multimode terminal does not change, thereby ensuring that a data service is not interrupted and may proceed normally. Accordingly, this embodiment puts forward that during network switching, when a network access request is sent to a modem module accessing a target network, a received IP address fed back by the modem module needs to be the same as an IP address acquired by another modem module that has currently accessed a network, so as to ensure that a NAT translation rule of a NAT module implementing address translation does not change during network switching. Specifically, in the prior art, there already exists a system that is capable of enabling multiple modem modules to acquire a same IP address, and no further details are provided herein.

Step 220: Cut off a communication connection between a NAT module performing address translation and the first modem module.

In this embodiment, the cutting off a communication connection between a NAT module and the first modem module may be implemented in multiple manners, for example, but not limited to, the following two manners. The specific manner is not limited in this embodiment.

A. Preset a configuration unit between multiple modem modules and the NAT module to acquire network parameters acquired by the multiple modem modules and control the NAT module to create and update a NAT translation table; and during network switching, disconnect a communication connection between the configuration unit and the first modem module, and delete a network parameter acquired by the first modem module to cut off the communication connection between the NAT module and the first modem module.

B. During network switching, dissociate a relevant NAT entry in the NAT module from the first modem module, store a NAT entry associated with the first modem module in a buffer area, and then delete a network parameter, for example, information such as an IP address and a route, configured on the first modem module to cut off the communication connection between the NAT module and the first modem module.

Step 230: Update network configuration of the second modem module, and establish a communication connection between the NAT module and the second modem module.

Specifically, in this embodiment, the updating network configuration of the second modem module and establishing a communication connection between the NAT module and the second modem module may be implemented in multiple manners, for example, but not limited to, the following two manners. The specific manner is not limited in this embodiment.

A. Update the network configuration of the second modem module by using the network parameter fed back by the second modem module, for example, update a routing table, a DNS server address, and so on, according to the router address in the network parameter, and then restore a communication connection between the second modem module and the preset configuration unit to establish the communication connection between the NAT module and the second modem module and switch a data service to the second modem module.

B. Update the network configuration of the second modem module by using the network parameter fed back by the second modem module, associate the NAT entry stored in the buffer area with the second modem module to establish the communication connection between the NAT module and the second modem module, and then configure route information according to the router address in the network parameter to switch a data service to the second modem module.

Step 240: Send a network exit request to the first modem module, and complete network switching after receiving a network exit success message fed back the first modem module.

Specifically, after the communication connection between the NAT module and the second modem module is established, which means that the data service has been successfully switched to the second modem module and accesses a new network by using the second modem module, the MCM of the multimode terminal sends the network exit request to the first modem module, so that the first modem module disconnects a connection with an original network; and after receiving the network exit request sent by the MCM, the first modem module disconnects the connection with the original network and feeds back a network exit success response to the MCM to inform the MCM of the network exit success.

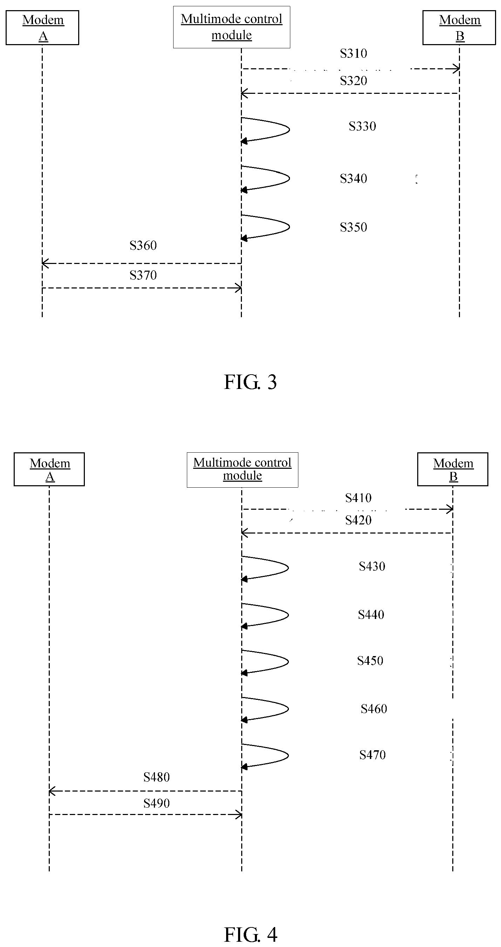

The following describes in detail the method for implementing network switching in the preceding embodiment by using a specific example which is not covered by the present invention. As shown in FIG. 3, a Modem A and a Modem B are two modem modules included in a multimode terminal, where the Modem A has accessed a network and is capable of normally performing a data service, and an MCM is a multimode switching control module controlling a network switching operation inside the multimode terminal. The method includes:
S310: When network switching needs to be performed, the MCM of the multimode terminal sends a network access request to the Modem B.
S320: The Modem B accesses a new network according to the received network access request and feeds back response information to the MCM after acquiring network parameters such as an IP address and a router address, where the IP address fed back by the Modem B to the MCM is the same as an IP address acquired by the Modem A that has accessed the network.
S330: Preset a configuration unit between the Modem A and Modem B and a NAT module to acquire network parameters acquired by the modem modules and control the NAT module to create and update a NAT translation table; after the MCM receives the response information fed back by the Modem B, disconnect a communication connection between the configuration unit and the Modem A, and delete a network parameter acquired by the Modem A to cut off a communication connection between the NAT module and the Modem A.
S340: The MCM updates network configuration of the Modem B by using parameters, such as an IP address and a router address, fed back by the Modem B.
S350: Establish a communication connection between the Modem B and the configuration unit to establish a communication connection between the NAT module and the Modem B.
S360: The MCM sends a network exit request to the Modem A.
S370: After receiving the network exit request, the Modem A disconnects a connection with an original network and feeds back a network exit success response message to the MCM to complete network switching.

The following describes in detail the method for implementing network switching in the preceding embodiment by using another specific example. As shown in FIG. 4, a Modem A and a Modem B are two modem modules included in a multimode terminal, where the Modem A has accessed a network and is capable of normally performing a data service, and an MCM is a multimode switching control module controlling a network switching operation inside the multimode terminal. The method includes:
S410: When network switching needs to be performed, the MCM of the multimode terminal sends a network access request to the Modem B.
S420: The Modem B accesses a new network according to the received network access request and feeds back response information to the MCM after acquiring network parameters such as an IP address and a router address, where the IP address fed back by the Modem B to the MCM is the same as an IP address acquired by the Modem A that has accessed the network;
S430: The MCM dissociates a relevant NAT entry in the NAT module from the Modem A and stores a NAT entry associated with the Modem A in a buffer area.
S440: The MCM deletes a network parameter, for example, information such as an IP address and a route, configured on the Modem A to cut off a communication connection between the NAT module and the Modem A.
S450: The MCM updates the network configuration of the Modem B according to a network parameter fed back by the Modem B.
S460: The MCM associates the NAT entry stored in the buffer area with the Modem B to establish a communication connection between the NAT module and the Modem B.
S470: The MCM configures route information of the Modem B according to a router address in the network parameter to switch a data service to the Modem B.
S480: The MCM sends a network exit request to the Modem A.
S490: After receiving the network exit request, the Modem A disconnects a connection with an original network and feeds back a network exit success response message to the MCM to complete network switching.

As can be seen from the above, during network switching performed by using the method of the embodiment of the present invention, a communication connection between a NAT module implementing address translation and a modem module accessing an original network is disconnected, and a communication connection is established between another modem module accessing a new network and the NAT module after the another modem module is configured with a relevant network parameter, so as to ensure that the link information and rule of a NAT translation table do not change in the network switching process. In this way, no IP address needs to be reconfigured, thereby ensuring that a service is not interrupted during network switching and improving the user experience and satisfaction.

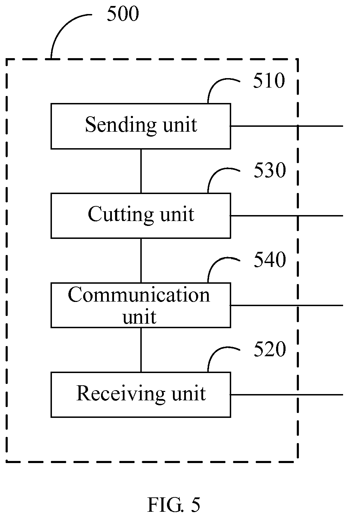

Based on the same idea, another embodiment of the present invention also provides an apparatus for implementing network switching. As shown in FIG. 5, the apparatus 500 includes: a sending unit 510, a receiving unit 520, a cutting unit 530, and a communication unit 540.

The sending unit 510 is configured to send a network access request to a second modem module of a multimode terminal and send a network exit request to a first modem module of the multimode terminal; the receiving unit 520 is configured to receive a network parameter including at least an IP address fed back by the second modem module and receive a network exit success message fed back by the first modem module, where the received IP address is the same as an IP address acquired by a first modem module that has accessed a network; the cutting unit 530 is configured to cut off a communication connection between a NAT module performing address translation in the multimode terminal and the first modem module after the receiving unit 520 receives the network parameter fed back by the second modem module; and the communication unit 540 is configured to: after the cutting unit 530 completes a cutting operation, update network configuration of the second modem module, establish a communication connection between the NAT module and the second modem module, and instruct the sending unit 510 to send the network exit request.

The apparatus 500 may further include (not shown in the figure): a configuration unit set between multiple modem modules and the NAT module, where the configuration unit is configured to acquire network parameters acquired by the multiple modem modules and control the NAT module to create and update a NAT translation table; based on this, the cutting unit 530 may further include (not shown in the figure): a first processing module disconnecting a communication connection between the configuration unit and the first modem module, and a first deleting module deleting a network parameter acquired by the first modem module after the first processing module completes a disconnecting operation.

In addition, the communication unit 540 may further include (not shown in the figure): a first updating module, a restoring module, and a first switching module, where the first updating module is configured to update the network configuration of the second modem module by using the network parameter fed back by the second modem module; the restoring module is configured to restore a communication connection between the second modem module and the configuration unit after the first updating module completes an updating operation; and the switching module is configured to switch a data service to the second modem module after the restoring module completes communication connection restoration.

In addition, the cutting unit 530 may further include (not shown in the figure): a dissociating module, a storage module, and a second deleting module. where the dissociating module is configured to dissociate a NAT entry in the NAT module from the first modem module; the storage module is configured to store a NAT entry associated with the first modem module; and the second deleting module is configured to delete a network parameter configured on the first modem module after the storage module completes a storage operation.

Based on this, the communication unit 540 may further include (not shown in the figure): a second updating module, an associating module, and a second switching module, where the second updating module is configured to update the network configuration of the second modem module by using the network parameter fed back by the second modem module; the associating module is configured to associate the NAT entry stored by the storage module with the second modem module after the second updating module completes an updating operation; and the second switching module is configured to switch a data service to the second modem module after the associating module completes an associating operation.

In addition, another embodiment of the present invention also provides a processor for implementing network switching, where the processor is configured to send a network access request to a second modem module of a multimode terminal, send a network exit request to a first modem module of the multimode terminal, receive a network parameter including at least an IP address fed back by the second modem module, and receive a network exit success message fed back by the first modem module, where the received IP address is the same as an IP address acquired by a first modem module that has accessed a network; after receiving the network parameter fed back by the second modem module, the processor cuts off a communication connection between a NAT module performing address translation in the multimode terminal and the first modem module, updates network configuration of the second modem module, establishes a communication connection between the NAT module and the second modem module, and instructs the sending unit to send the network exit request to complete network switching.

It should be noted that, a person skilled in the art may easily understand, various apparatuses for implementing network switching in the preceding embodiments may exist as a part of a multimode terminal, and their implementation of network switching in the multimode terminal is the same as that described in the preceding embodiments. Therefore, a multimode terminal that includes the apparatuses for implementing network switching in the preceding embodiments shall also fall within the protection scope of the present invention, and details are not provided herein.

A person skilled in the art may further appreciate that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of every embodiment according to functions. Whether these functions are performed by hardware or software depends on particular applications and design constraint conditions of the technical solutions. A person skilled in the art may use different methods to implement the described functions for each particular application, but it should not be considered that the implementation goes beyond the scope of the embodiments of the present invention.

The steps of the methods or algorithms described in combination with the embodiments herein may be implemented using hardware, a software module executed by a processor, or the combination thereof.

A person skilled in the art may implement or use the embodiments of the present invention based on the foregoing descriptions of the disclosed embodiments. Multiple modifications to these embodiments are apparent for a person skilled in the art. The general principle defined in the present invention may be implemented in other embodiments without departing from the scope of the embodiments of the present invention. Therefore, the embodiments of the present invention will not be limited to the embodiments described in the document but extends to the widest scope that complies with the principle and novelty disclosed in the document.

The foregoing describes only exemplary embodiments of the present invention and is not intended to limit the embodiments of the present invention. Any modification, equivalent replacement, or improvement made without departing from the principle of the embodiments of the present invention shall fall within the protection scope of the embodiments of the present invention.

## Claims

1. A method for implementing network switching performed in a multimode terminal, comprising:
sending(210) a network access request to a second modem module and receiving a network parameter comprising at least an IP address fed back by the second modem module, wherein the IP address fed back by the second modem module is the same as an IP address acquired by a first modem module that has accessed a network;
cutting(220) off a communication connection between a NAT module performing address translation and the first modem module; and
updating(230) a network configuration of the second modem module and establishing a communication connection between the NAT module and the second modem module;
wherein the cutting off a communication connection between a NAT module and the first modem module specifically comprises:
dissociating(S430) a NAT entry in the NAT module from the first modem module;
storing(S430) a NAT entry associated with the first modem module; and
deleting(S440) a network parameter configured on the first modem module to cut off the communication connection between the NAT module and the first modem module; and the updating network configuration of the second modem module and establishing a communication connection between the NAT module and the second modem module specifically comprises:
updating(S450) the network configuration of the second modem module by using the network parameter fed back by the second modem module;
associating(S460) the stored NAT entry with the second modem module; and
switching(S470) a data service to the second modem module.

2. An apparatus for implementing network switching, comprising a sending unit(510), a receiving unit(520), a cutting unit(530), and a communication unit(540), wherein:
the sending unit(510) is configured to send a network access request to a second modem module of a multimode terminal and send a network exit request to a first modem module of the multimode terminal;
the receiving unit(520) is configured to receive a network parameter comprising at least an IP address fed back by the second modem module and receive a network exit success message fed back by the first modem module, wherein the received IP address is the same as an IP address acquired by a first modem module that has accessed a network;
the cutting unit(530) is configured to cut off a communication connection between a NAT module performing address translation in the multimode terminal and the first modem module after the receiving unit receives the network parameter fed back by the second modem module; and
the communication unit (540) is configured to: after the cutting unit completes a cutting operation, update network configuration of the second modem module, establish a communication connection between the NAT module and the second modem module, and instruct the sending unit(510) to send the network exit request;
wherein the cutting unit (530) further comprises a dissociating module, a storage module, and a second deleting module, wherein:
the dissociating module is configured to dissociate a NAT entry in the NAT module from the first modem module;
the storage module is configured to store a NAT entry associated with the first modem module; and
the second deleting module is configured to delete a network parameter configured on the first modem module after the storage module completes a storage operation;and the communication unit(540) further comprises a second updating module, an associating module, and a second switching module, wherein:
the second updating module is configured to update the network configuration of the second modem module by using the network parameter fed back by the second modem module;
the associating module is configured to associate the NAT entry stored by the storage module with the second modem module after the second updating module completes an updating operation; and
the second switching module is configured to switch a data service to the second modem module after the associating module completes an associating operation.

## Patentansprüche

1. Verfahren zum Umsetzen von Netzwerkumschalten, das in einem multimodalen Endgerät ausgeführt wird, umfassend:
Senden (210) einer Netzwerkzugangsanfrage zu einem zweiten Modemmodul und Empfangen eines Netzwerkparameters, der mindestens eine IP-Adresse umfasst, die von dem zweiten Modemmodul zurückgereicht wird, wobei die IP-Adresse, die von dem zweitem Modemmodul zurückgereicht wird, dieselbe ist wie eine IP-Adresse, die von einem ersten Modemmodul, das auf ein Netzwerk zugegriffen hat, erfasst wurde;
Abschalten (220) einer Kommunikationsverbindung zwischen einem NAT-Modul, das Adressübersetzung ausführt, und dem ersten Modemmodul und Aktualisieren (230) einer Netzwerkkonfiguration des zweiten Modemmoduls und Aufbauen einer Kommunikationsverbindung zwischen dem NAT-Modul und dem zweiten Modemmodul;
wobei das Abschalten einer Kommunikationsverbindung zwischen einem NAT-Modul und dem ersten Modemmodul spezifisch umfasst:
Dissoziieren (S430) eines NAT-Eintrags in das NAT-Modul von dem ersten Modemmodul,
Speichern (S430) eines NAT-Eintrags, der mit dem ersten Modemmodul assoziiert ist, und
Löschen (S440) eines Netzwerkparameters, der auf dem ersten Modemmodul konfiguriert ist, um die Kommunikationsverbindung zwischen dem NAT-Modul und dem ersten Modemmodul abzuschalten, und wobei das Aktualisieren der Netzwerkkonfiguration des zweiten Modemmoduls und Aufbauen einer Kommunikationsverbindung zwischen dem NAT-Modul und dem zweiten Modemmodul spezifisch umfasst:
Aktualisieren (S450) der Netzwerkkonfiguration des zweiten Modemmoduls durch Verwenden der Netzwerkparameter, die von dem zweiten Modemmodul zurückgereicht werden;
Assoziieren (S460) des gespeicherten NAT-Eintrags mit dem zweiten Modemmodul und
Umschalten (S470) eines Datendienstes auf das zweite Modemmodul.

2. Gerät zum Umsetzen von Netzwerkumschalten, das eine Sendeeinheit (510), eine Empfangseinheit (520), eine Abschalteinheit (530) und eine Kommunikationseinheit (540) umfasst, wobei:
die Sendeeinheit (510) konfiguriert ist, um eine Netzwerkzugangsanfrage zu einem zweiten Modemmodul eines multimodalen Endgeräts zu senden und eine Netzwerkausstiegsanfrage zu einem ersten Modemmodul des multimodalen Endgeräts zu senden,
die Empfangseinheit (520) konfiguriert ist, um einen Netzwerkparameter zu empfangen, der mindestens eine IP-Adresse umfasst, die von dem zweiten Modemmodul zurückgereicht wird, und eine Netzwerkausstiegserfolgsnachricht, die von dem ersten Modemmodul zurückgereicht wird, zu empfangen, wobei die empfangene IP-Adresse dieselbe ist wie eine IP-Adresse, die von einem ersten Modemmodul, das auf ein Netzwerk zugegriffen hat, erfasst wurde,
die Abschalteinheit (530) konfiguriert ist, um eine Kommunikationsverbindung zwischen einem NAT-Modul, das Adressübersetzung in dem multimodalen Endgerät ausführt, und dem ersten Modemmodul abzuschalten, nachdem die Empfangseinheit den Netzwerkparameter, der von dem zweiten Modemmodul zurückgereicht wird, empfangen hat und
die Kommunikationseinheit (540) konfiguriert ist: um, nach dem Abschließen eines Abschaltvorgangs durch die Abschalteinheit, die Netzwerkkonfiguration des zweiten Modemmoduls zu aktualisieren, eine Kommunikationsverbindung zwischen dem NAT-Modul und dem zweiten Modemmodul aufzubauen, und die Sendeeinheit (510) zum Senden der Netzwerkausstiegsanfrage anzuweisen,
wobei die Abschalteinheit (530) ferner ein Dissoziationsmodul, ein Speichermodul und ein zweites Löschmodul umfasst, wobei:
das Dissoziationsmodul konfiguriert ist, um einen NAT-Eintrag in das NAT-Modul von dem ersten Modemmodul zu dissoziierten;
das Speichermodul konfiguriert ist, um einen NAT-Eintrag, der mit dem ersten Modemmodul assoziiert ist, zu speichern, und
das zweite Löschmodul konfiguriert ist, um einen Netzwerkparameter zu löschen, der auf dem ersten Modemmodul konfiguriert wird, nachdem das Speichermodul einen Speichervorgang abgeschlossen hat, und die Kommunikationseinheit (540) ferner ein zweites Aktualisierungsmodul, ein Assoziationsmodul und ein zweites Umschaltmodul umfasst, wobei:
das zweite Aktualisierungsmodul konfiguriert ist, um die Netzwerkkonfiguration des zweiten Modemmoduls durch Verwenden des Netzwerkparameters, der von dem zweiten Modemmodul zurückgereicht wird, zu aktualisieren;
das Assoziationsmodul konfiguriert ist, um den NAT-Eintrag, der von dem Speichermodul gespeichert wird, mit dem zweiten Modemmodul zu assoziierten,
nachdem das zweite Aktualisierungsmodul einen Aktualisierungsvorgang abgeschlossen hat, und
das zweite Umschaltmodul konfiguriert ist, um einen Datendienst auf das zweite Modemmodul umzuschalten, nachdem das Assoziationsmodul einen Assoziationsvorgang abgeschlossen hat.

## Revendications

1. Procédé pour mettre en oeuvre une commutation de réseau effectuée dans un terminal multimode, comprenant les étapes suivantes :
envoyer (210) une demande d'accès au réseau à un second module de modem et recevoir un paramètre de réseau comprenant au moins une adresse IP retournée par le second module de modem, où l'adresse IP retournée par le second module de modem est identique à une adresse IP acquise par un premier module de modem qui a accédé à un réseau ;
rompre (220) d'une connexion de communication entre un module NAT exécutant une traduction d'adresse et le premier module de modem ; et
mettre à jour (230) une configuration de réseau du second module de modem et établir une connexion de communication entre le module NAT et le second module de modem ;
où la rupture d'une connexion de communication entre un module NAT et le premier module de modem comprend spécifiquement les étapes suivantes :
dissocier (S430) une entrée NAT dans le module NAT du premier module de modem ;
stocker (S430) une entrée NAT associée au premier module de modem ; et
supprimer (S440) un paramètre de réseau configuré sur le premier module de modem pour rompre la connexion de communication entre le module NAT et le premier module de modem ; et la mise à jour de la configuration de réseau du second module de modem et l'établissement d'une connexion de communication entre le module NAT et le second module de modem comprennent spécifiquement les étapes suivantes :
mettre à jour (S450) la configuration de réseau du second module de modem en utilisant le paramètre de réseau retourné par le second module de modem ;
associer (S460) l'entrée NAT stockée au second module de modem ; et
commuter (S470) un service de données vers le second module de modem.

2. Appareil pour mettre en oeuvre une commutation de réseau, comprenant une unité d'envoi (510), une unité de réception (520), une unité d'interruption (530) et une unité de communication (540), où :
l'unité d'envoi (510) est configurée pour envoyer une demande d'accès au réseau à un second module de modem d'un terminal multimode et envoyer une demande de sortie de réseau à un premier module de modem du terminal multimode ;
l'unité de réception (520) est configurée pour recevoir un paramètre de réseau comprenant au moins une adresse IP retournée par le second module de modem et recevoir un message de réussite de sortie de réseau retourné par le premier module de modem, où l'adresse IP reçue est la même qu'une adresse IP acquise par un premier module de modem qui a accédé à un réseau ;
l'unité d'interruption (530) est configurée pour interrompre une connexion de communication entre un module NAT exécutant une traduction d'adresse dans le terminal multimode et le premier module de modem après que l'unité de réception a reçu le paramètre de réseau retourné par le second module de modem ; et
l'unité de communication (540) est configurée pour : après que l'unité d'interruption a effectué une opération de rupture, mettre à jour la configuration de réseau du second module de modem, établir une connexion de communication entre le module NAT et le second module de modem, et donner pour instruction à l'unité d'envoi (510) d'envoyer la demande de sortie du réseau ;
où l'unité d'interruption (530) comprend en outre un module de dissociation, un module de stockage et un second module de suppression, où :
le module de dissociation est configuré pour dissocier une entrée NAT dans le module NAT du premier module de modem ;
le module de stockage est configuré pour stocker une entrée NAT associée avec le premier module de modem ; et
le second module de suppression est configuré pour supprimer un paramètre de réseau configuré sur le premier module de modem après que le module de stockage a effectué une opération de stockage ; et l'unité de communication (540) comprend en outre un second module de mise à jour, un module d'association et un second module de commutation, où :
le second module de mise à jour est configuré pour mettre à jour la configuration de réseau du second module de modem en utilisant le paramètre de réseau retourné par le second module de modem ;
le module d'association est configuré pour associer l'entrée NAT stockée par le module de stockage avec le second module de modem après que le second module de mise à jour a effectué une opération de mise à jour ; et
le second module de commutation est configuré pour commuter un service de données vers le second module de modem après que le module d'association a effectué une opération d'association.
